# DEMANDE DE BREVET EUROPEEN

(11) **EP 1 002 962 A1**
(43) Date de publication de la demande: **24.05.2000**
(21) Numéro de dépôt: 99402865.2
(22) Date de dépôt: 18.11.1999
(51) Int. Cl.: F16B 41/00

(54) **Dispositif de sécurisation pour organe de solidarisation**

(30) Priorité: 19.11.1998 FR 9814566
(71) Demandeur: FRANCE TELECOM, 75015 Paris (FR)
(72) Inventeur: Hillereau, Bertrand, 85430 Nieul le Dolent (FR); Fenninger, Jean-Pierre, 45400 Semoy (FR); Montigny, Gilles, 45160 Saint Hilaire Saint Mesmin (FR)
(74) Mandataire: Armengaud Ainé, Alain

(57) **Abrégé**

Dispositif de sécurisation pour organe de solidarisation, comportant un moyen (1) de solidarisation et un organe de sécurisation (2) qui interdit l'accès au moyen de solidarisation (1), l'organe de sécurisation (2) comprenant, d'une part une tête (4) formée d'une enveloppe (5) à paroi notamment cylindrique, et d'autre part une paroi de fond (6) munie d'un orifice (12) permettant le passage d'une tige (8) coopérant avec le moyen de solidarisation (1), caractérisé en ce que pour permettre le vissage et/ou le dévissage de l'organe de sécurisation (2), il est nécessaire, d'une part qu'un téton ou une forme creuse d'un outil spécifique coopère au niveau d'une empreinte (11) pratiquée dans la tête (10) de la tige (8), cette empreinte étant décalée axialement par rapport à l'axe longitudinal de la tige (8), et d'autre part qu'une partie cylindrique de l'outil spécifique pénètre au sein de l'orifice (12) pratiqué dans la paroi de fond (6).

## Description

La présente invention est relative à un dispositif de sécurisation pour organe de solidarisation couramment rencontré dans le commerce, tel que notamment des vis à tête cruciforme, à tête hexagonale, à six pans creux, tête de boulon, goujons...

Ces organes de solidarisation sont de façon classique utilisés pour maintenir un couvercle sur un boîtier ou sur une armoire, ces derniers pouvant contenir des composants électroniques, électriques, électromécaniques ou plus généralement des appareils et organes divers qu'il convient de protéger en évitant leur accès à toute personne non habilitée.

Tout particulièrement, lorsque ces coffrets et armoires sont destinés à recevoir de l'instrumentation téléphonique, informatique, électrique, il est nécessaire de protéger leur accès pour, d'une part éviter tout accident à l'égard des tiers, et d'autre part empêcher tout branchement parasite, garantissant ainsi le respect des normes de certification.

Les opérateurs en charge de ces réseaux de distribution ont développé toute une gamme de produits qui intègre ces fonctions de sécurisation. Il s'agit notamment de coffrets et armoires renforcés dont les couvercles et battants sont pourvus de serrures à canon protégé ou une serrure dont la gâche ne peut être actionnée qu'à l'aide d'un outil à empreinte spéciale dont la diffusion est restreinte aux seuls agents dûment accrédités par la société opératrice, ou plus simplement encore ces produits sont sécurisés par l'utilisation d'organes de serrage (boulon, vis, écrou...) dont le profil nécessite l'emploi d'un outil spécial, qui par définition a une diffusion très restreinte et quasiment nulle pour le public.

Ainsi, on connaît un système de vis-écrou dont chacun des composants possède un profil bien adapté et propre à chaque application.

Globalement, la pièce formant écrou comporte une partie formant tige, supportant à l'une de ses extrémités une tête sensiblement tronconique et dont la partie centrale est pourvue d'un orifice fileté pour la coopération avec une partie mâle venue de la partie formant vis, la pièce formant écrou étant noyée dans l'une des parois du boîtier ou du couvercle et immobilisée en rotation en raison de l'utilisation de méplats notamment sur la tête tronconique, ces méplats étant recouverts par la paroi.

La partie mâle formant vis est composée de deux éléments distincts :
- un premier élément conforme la tête de vis proprement dite, elle est munie d'une zone filetée qui coopère avec un taraudage réalisé dans l'une des parois du couvercle ou du battant et d'une zone tronconique, l'ensemble étant parcouru par un orifice central comportant une partie lisse et une partie filetée, le premier élément étant également noyé dans le couvercle ;
- un deuxième élément qui permet de solidariser la partie femelle à la partie mâle, grâce à une tige pourvue d'une extrémité filetée qui coopère avec le taraudage réalisé au sein de la partie femelle, l'autre extrémité de la tige comportant une tête munie d'une empreinte spécifique.

Des moyens, de sécurisation connus de l'art antérieur ont été développés pour des applications relevant des antivols de roues, tels que notamment dans le modèle d'utilité allemand G 94 04 928.9 et dans le brevet français FR 2 587 422.

Le principal inconvénient de ce type de moyen de sécurisation réside principalement dans le fait qu'aussi bien la partie mâle que la partie femelle sont des pièces très spécifiques comportant des usages particuliers, à tolérances de fabrication sévères qui nécessitent des temps d'usinage importants, d'où un coût de revient conséquent.

De plus, en raison de la nature des usinages à réaliser, ces pièces ne peuvent être fabriquées qu'en petites séries, ce qui interdit une diffusion à grande échelle.

Dans le cas des dispositifs pour antivols de roues, il est néanmoins possible d'obtenir le dévissage du goujon ou de l'écrou de roue à l'aide d'un chasse-goupille ou de détruire l'élément protecteur à l'aide d'un burin.

La présente invention vise donc à pallier ces inconvénients en proposant un dispositif qui offre un degré de sécurisation similaire aux systèmes connus de l'art antérieur et qui puisse être fabriqué en grande série, pour une diffusion et une adaptation aux moyens de verrouillage couramment rencontrés.

A cet effet, le dispositif de sécurisation pour organe de solidarisation, objet de l'invention, comportant un moyen de solidarisation et un organe de sécurisation qui interdit l'accès au moyen de solidarisation, l'organe de sécurisation comprenant, d'une part une tête formée d'une enveloppe à paroi notamment cylindrique, et d'autre part une paroi de fond munie d'un orifice permettant le passage d'une tige coopérant avec le moyen de solidarisation, se caractérise en ce que pour permettre le vissage et/ou le dévissage de l'organe de sécurisation, il est nécessaire, d'une part qu'un téton ou une forme creuse d'un outil spécifique coopère au niveau d'une empreinte pratiquée dans la tête de la tige, cette empreinte étant décalée axialement par rapport à l'axe longitudinal de la tige, et d'autre part qu'une partie cylindrique de l'outil spécifique pénètre au sein de l'orifice pratiqué dans la paroi de fond.

D'autres caractéristiques d'un dispositif de sécurisation pour organe de solidarisation établi conformément à l'invention, apparaîtront encore à travers la description qui suit de plusieurs exemples de réalisation, donnés à titre indicatif et non limitatif, en référence aux dessins annexés sur lesquels :
- la figure 1 est une vue plane, en élévation frontale, du dispositif faisant l'objet de l'invention ;
- la figure 2 est une vue en coupe et en élévation latérale du dispositif de sécurisation pour organe de solidarisation ;
- les figures 3a et 3b illustrent différentes formes de réalisation de la tige 8 ;
- les figures 4a, 4b, 4c, 4d et 4e illustrent diverses formes d'empreintes .
- les figures 5a, 5b et 5c montrent différentes valeurs de désaxage entre l'axe de rotation de la tige et l'axe de l'empreinte ;
- la figure 6 illustre une variante de réalisation du moyen de solidarisation.

Selon un mode préféré de réalisation du dispositif faisant l'objet de l'invention, celui ci comporte principalement deux pièces 1, 2 :
- la première est composée par un moyen 1 de solidarisation largement diffusé et utilisé dans l'industrie, il s'agit notamment d'un boulon, d'une vis, d'un goujon, à têtes à profils variés (cruciforme, hexagonale, à six pans creux, à empreinte classique,...) ou encore plus simplement d'une portion de tige filetée ;
- la seconde constitue l'organe de sécurisation 2 qui interdit l'accès au moyen de solidarisation 1, qui est pourvu de moyens de préhension classiques (empreinte pour tournevis, ou clés standard du commerce (clés plates, à oeil, à douilles...).

Selon une caractéristique avantageuse de l'invention, on réalise un perçage 3, borgne ou débouchant, sensiblement au centre du moyen de solidarisation 1 classique et sur une profondeur suffisante pour permettre la réalisation d'un taraudage qui autorise la coopération avec un nombre de filets suffisants, venus de l'organe de sécurisation 2.

Selon une autre caractéristique avantageuse de l'invention, l'organe de sécurisation 2 comporte une tête 4 formée d'une enveloppe 5 à paroi notamment cylindrique ou polygonale, dont les dimensions, notamment le diamètre et la profondeur, sont supérieures à celles correspondantes du moyen de sécurisation 1 classique, cette enveloppe 5 étant par exemple une portion de tube de sections transversales variées (carrée, rectangulaire, circulaire...), notamment en acier inoxydable.

Cette enveloppe 5 est occultée à l'une de ses extrémités par une paroi de fond 6, préférentiellement à flan incliné 7 afin d'empêcher toute prise par un outil ou une pince, dont les mords glisseraient ainsi naturellement des parois biseautées. La paroi de fond est munie par ailleurs d'un épaulement au diamètre intérieur de l'enveloppe (5) afin de faciliter le centrage des pièces (5) et (6).

Selon un premier mode de réalisation (non représenté sur les figures), l'enveloppe 5 et la paroi de fond 6 forment une seule pièce, celle-ci étant notamment obtenue par une opération de décolletage.

Selon un deuxième mode de réalisation, non limitatif, la paroi de fond 6 et l'enveloppe 5 forment deux pièces indépendantes.

Particulièrement, les parois biseautées sont réalisées sur toute la périphérie de la paroi frontale 6 de l'enveloppe 5 et plus l'incidence du biseau sera importante plus la prise par les mords d'un outil sera rendu difficile.

On peut également réaliser un traitement de surface (cémentation, trempe..) sur ces parois afin d'augmenter superficiellement les propriétés de résistance mécanique.

La paroi frontale 6 comporte un orifice 12 permettant le passage d'une tige 8 dont le rôle sera décrit ci-dessous.

Selon une autre caractéristique avantageuse de l'invention, la tige 8 comporte une extrémité filetée 9 d'un pas identique à celui formé dans l'orifice 3 pratiqué dans le moyen de solidarisation 1 classique.

La tête 10 de cette tige 8 est munie d'une empreinte spécifique qui empêche sa prise, si l'utilisateur ne possède pas l'outil comportant l'empreinte complémentaire.

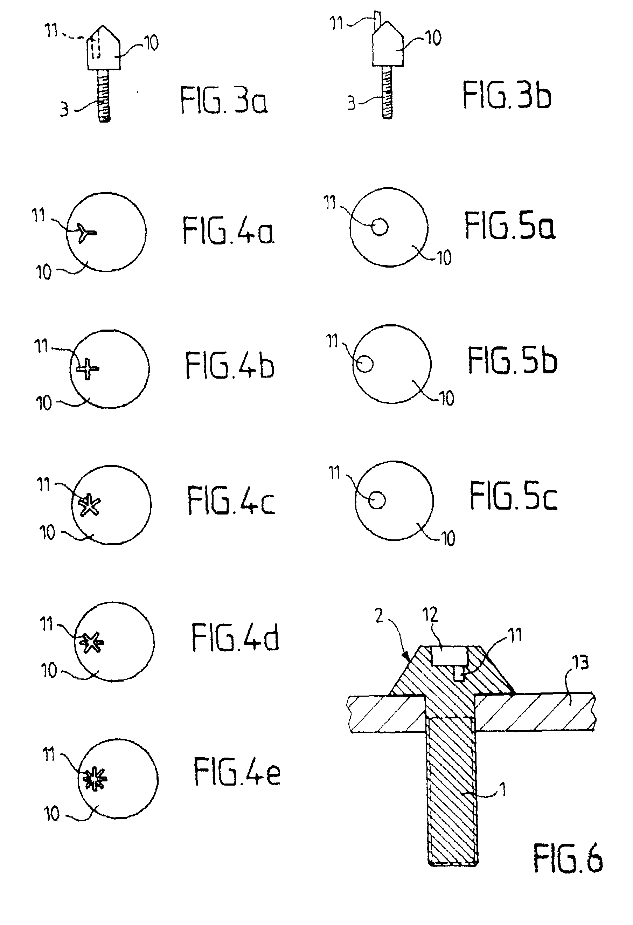

Selon une caractéristique de l'invention, la tête 10 de la tige 8 présente un embout conique tel qu'illustré par exemple au niveau des figures 3a et 3b.

De même, on prévoit de disposer dans cet embout conique une empreinte spécifique, en creux ou en relief, qui déterminera la forme de l'empreinte complémentaire pratiquée sur l'outil.

En variante, l'empreinte spécifique réalisée dans la partie conique ou la partie droite de la tête 10 de la tige 8, peut présenter différents profils tels qu'illustrés aux figures 4a, 4b, 4c, 4d, 4e ; il s'agit notamment d'une étoile à trois, quatre, cinq, six, huit branches. Quel que soit le mode de réalisation, l'empreinte spécifique, en creux ou en relief, est décalée axialement par rapport à l'axe de rotation de la tige 8.

Selon encore une autre caractéristique de l'invention, la valeur du désaxage entre l'axe de rotation de la tige 8 et l'axe de l'empreinte spécifique ou de l'orifice 11, sera choisi en fonction de l'encombrement de la tête 10 de la tige 8. A titre d'exemple, on pourra se reporter au niveau des figures 5a, 5b, 5c sur lesquelles on a représenté différentes valeurs de désaxage.

Selon un mode de réalisation non limitatif, cette empreinte spécifique peut être réalisée également sous la forme d'une empreinte ou d'un orifice 11 pratiqué dans la tête 10 de la tige 8, cette empreinte étant décalée axialement par rapport à l'axe longitudinal de la tige 8, de manière à pouvoir exercer un couple sur la tige. L'outil spécifique comporte alors comme moyen complémentaire, d'une part une mèche cylindrique de diamètre sensiblement similaire au diamètre de l'orifice 12, et d'autre part un téton de diamètre ou de profil sensiblement similaire au diamètre ou à la forme de l'empreinte ou de l'orifice 11 pratiqué dans la tête 10 de la tige 8. Afin que l'on puisse exercer un couple sur la tête 10 de la tige 8 pour la visser ou la dévisser, il est nécessaire à la fois que le téton coopère au niveau de l'orifice 11 pratiqué dans la tête 10 et que la partie cylindrique de la mèche pénètre au sein de l'orifice 12 pratiqué dans la paroi frontale 6.

Bien entendu, si l'empreinte 11 présente une forme en relief à la place d'une forme en creux, le téton faisant saillie sur la tête de l'outil spécifique aura une forme complémentaire et présentera alors un profil en creux. Le mode d'action de l'outil spécifique sur le dispositif de sécurisation restera similaire.

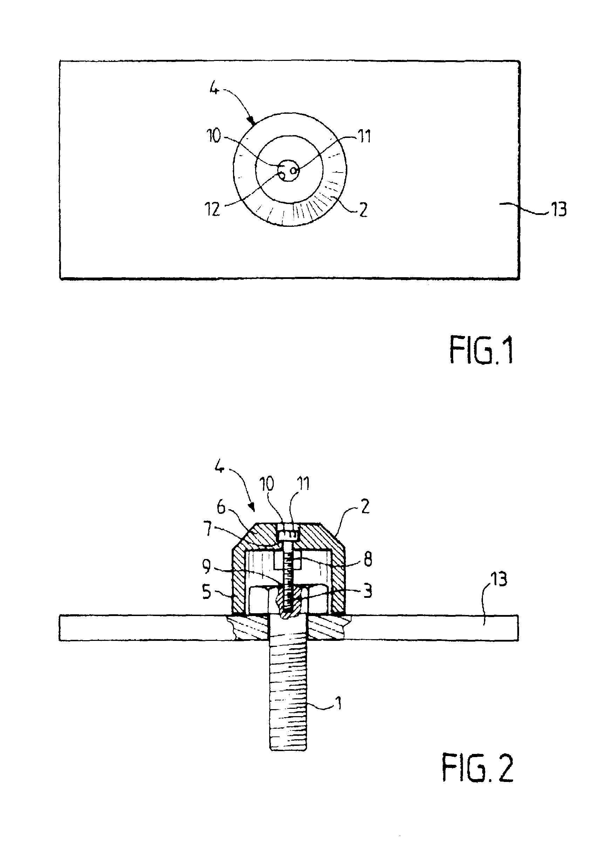

Le mode opératoire du dispositif de sécurisation pour organe de solidarisation selon l'invention est le suivant :
- un moyen de solidarisation classique 1 emprisonne une plaque support 13 (cf. figures 1 et 2), cette plaque support 13 pouvant représenter par exemple la paroi d'un couvercle, d'un boîtier ou plus généralement n'importe quel réceptacle dont on veut interdire l'accès,
- après avoir percé et taraudé la tête du moyen de solidarisation 1,
- on verrouille à l'aide de la tige 8, l'organe de sécurisation 2 sur la tête du moyen de solidarisation 1, l'enveloppe 5 empêchant l'accès à la tête du moyen de solidarisation 1.

Selon encore une autre variante de réalisation, particulièrement destinée à des moyens de solidarisation de petits diamètres, on prévoit que la tête 13 de ce moyen de solidarisation 1 présente un profil similaire à l'organe de sécurisation 2. La tête 13 de ce moyen de solidarisation 1 est munie d'un premier orifice 12 dans lequel est réalisé un second orifice ou empreinte 11, ce second orifice 11 étant désaxé par rapport au premier orifice 12. Cette variante de réalisation est représentée à la figure 6.

Bien entendu, il va de soi que l'invention ne se limite pas à l'exemple de réalisation plus spécialement décrit ci-dessus en référence aux dessins annexés ; elle en embrasse au contraire toutes les variantes et notamment elle permet de rendre inaccessible tous coffrets ou pièces mécaniques assemblés par des moyens classiques du commerce.

## Revendications

1. Dispositif de sécurisation pour organe de solidarisation, comportant un moyen (1) de solidarisation et un organe de sécurisation (2) qui interdit l'accès au moyen de solidarisation (1), l'organe de sécurisation (2) comprenant, d'une part une tête (4) formée d'une enveloppe (5) à paroi notamment cylindrique, et d'autre part une paroi de fond (6) munie d'un orifice (12) permettant le passage d'une tige (8) coopérant avec le moyen de solidarisation (1), caractérisé en ce que pour permettre le vissage et/ou le dévissage de l'organe de sécurisation (2), il est nécessaire, d'une part qu'un téton ou une forme creuse d'un outil spécifique coopère au niveau d'une empreinte (11) pratiquée dans la tête (10) de la tige (8), cette empreinte étant décalée axialement par rapport à l'axe longitudinal de la tige (8), et d'autre part qu'une partie cylindrique de l'outil spécifique pénètre au sein de l'orifice (12) pratiqué dans la paroi de fond (6).

2. Dispositif selon la revendication 1, caractérisé en ce que la tige (8) comporte une extrémité filetée (9) d'un pas identique à celui formé dans un orifice (3) pratiqué dans le moyen de solidarisation (1).

3. Dispositif selon la revendication 1 ou 2, caractérisé en ce que la tête (10) de la tige (8) est munie d'une empreinte spécifique qui empêche sa prise, si l'utilisateur ne possède pas l'outil comportant l'empreinte complémentaire.

4. Dispositif selon l'une quelconque des revendications précédentes, caractérisé en ce que le moyen de sécurisation comporte un perçage (3), borgne ou débouchant, sensiblement en son centre et sur une profondeur suffisante pour permettre la réalisation d'un taraudage qui autorise la coopération avec un nombre de filets suffisants, venus de l'organe de sécurisation (2).

5. Dispositif selon l'une quelconque des revendications précédentes, caractérisé en ce que les dimensions de l'enveloppe (5), notamment le diamètre et la profondeur, sont supérieures à celles correspondantes du moyen de sécurisation (1).

6. Dispositif selon l'une quelconque des revendications précédentes, caractérisé en ce que la paroi de fond (6) de l'enveloppe (5) comporte un flan incliné (7) afin d'empêcher toute prise par les mords d'un outil ou d'une pince, la paroi de fond étant munie par ailleurs d'un épaulement au diamètre intérieur de l'enveloppe (5) afin de faciliter le centrage des pièces (5) et (6).

7. Dispositif selon l'une quelconque des revendications précédentes, caractérisé en ce qu'on réalise un traitement de surface (cémentation, trempe..) sur les parois de l'enveloppe (5) afin d'augmenter superficiellement les propriétés de résistance mécanique.

8. Dispositif selon l'une quelconque des revendications précédentes, caractérisé en ce que la tête (10) de la tige (8) comporte un embout conique.

9. Dispositif selon l'une quelconque des revendications précédentes, caractérisé en ce que l'empreinte ou l'orifice (11) réalisé dans la tête (10) de la tige (8) comporte un profil varié, en creux ou en relief, notamment de section droite circulaire ou en forme d'étoile.
